# EUROPÄISCHE PATENTSCHRIFT

(11) **EP 0 988 916 B1**
(45) Veröffentlichungstag und Bekanntmachung des Hinweises auf die Patenterteilung: **23.04.2003**
(21) Anmeldenummer: 99116649.7
(22) Anmeldetag: 26.08.1999
(51) Int. Cl.: B23K 26/00

(54) **Laseranordnung, vorzugsweise Laserbearbeitungsmaschine**
Laser device, preferably laser machining device
Dispositif laser, de préférence dispositif d'usinage au laser

(30) Priorität: 21.09.1998 DE 29816879 U
(43) Veröffentlichungstag der Anmeldung: 29.03.2000
(73) Patentinhaber: Trumpf GmbH & Co, D-71254 Ditzingen (DE)
(72) Erfinder: Horn, Dr. Armin, 71272 Renningen (DE); Fissler, Klaus, 71732 Tamm (DE)
(74) Vertreter: KOHLER SCHMID + PARTNER

(56) Entgegenhaltungen:
- DE-A- 3 710 816
- DE-A- 19 630 437
- FR-A- 2 698 495
- PATENT ABSTRACTS OF JAPAN vol. 012, no. 490 (M-779), 21. Dezember 1988 (1988-12-21) & JP 63 212080 A (MATSUSHITA ELECTRIC IND CO LTD), 5. September 1988 (1988-09-05)
- HAFERKAMP ET AL.: "Prozessintegrierte Qualitätsprüfung beim Plasma- und Laserstrahlschneiden" VDI-Z, Nr. 6, Juni 1998 (1998-06), Seiten 76-80, XP002126313 Düsseldorf

## Beschreibung

Die Erfindung betrifft eine Laseranordnung, vorzugsweise Laserbearbeitungsmaschine gemäß Oberbegriff des Anspruchs 1. Eine derartige Laseranordnung ist aus der FR-A-2 698 495 bekannt.

Laseranordnungen der beschriebenen Art sind bereits seit langem gebräuchlich. Das oder die genannten optischen Elemente sind dabei für die Laseranordnung funktionsnotwendig.

Zur Gewährleistung von Bearbeitungsergebnissen hoher Qualität werden an bekannten Laserbearbeitungsmaschinen Überwachungsund Steuerungseinrichtungen unterschiedlicher Art verwendet. Beispielsweise offenbaren DE-A-37 10 816, DE-A-196 30 437 und ein Artikel von Haferkamp et al. in der Zeitschrift VDI-Z Nr. 6, 1998, S. 76 ff. (Springer-VDI-Verlag GmbH & Co. KG, Düsseldorf, Deutschland) mit der Maschinensteuerung verbundene Vorrichtungen zur Beobachtung der Bearbeitungsstelle an dem betreffenden Werkstück. Dabei erfolgt die Beobachtung der Bearbeitungsstelle durch die Fokussierlinse des Bearbeitungskopfes der Maschine hindurch. In Abhängigkeit von dem Ergebnis der Beobachtung wird die betreffende Maschine gesteuert. Die vorbekannten Einrichtungen nutzen die Erkenntnis, daß die von dem Werkstück an der Bearbeitungsstelle reflektierte bzw. emittierte Strahlung eine Aussage über den Bearbeitungsprozeß, insbesondere über das Bearbeitungsergebnis ermöglicht.

Einem hiervon verschiedenen Problem widmet sich die vorliegende Erfindung.

So ist in der Praxis zu beobachten, daß optische Elemente von Laseranordnungen, insbesondere Fokussierlinsen von Laserbearbeitungsmaschinen, im Laufe des Vorrichtungsbetriebes durch Ablagerungen, etwa durch von der Bearbeitungsstelle des Laserstrahls stammende Spritzer, verschmutzen. Infolge der Verschmutzung absorbiert das betreffende optische Element einen Teil der auftreffenden Laserstrahlung. Dies führt zu einer Erwärmung, die bei den heute üblichen hohen Laserleistungen bis hin zur Verdampfung beispielsweise der betreffenden Linse gehen kann. Die dabei entstehenden Dämpfe sind gesundheitsschädlich und verunreinigen die Laseranordnung, etwa den Strahlführungsraum der Laserbearbeitungsmaschine.

Diesem Mißstand abzuhelfen, hat sich die vorliegende Erfindung zum Ziel gesetzt.

Erfindungsgemäß gelöst wird diese Aufgabe dadurch, daß an einer Laseranordnung der eingangs genannten Art wenigstens eine Vorrichtung zur Erfassung der Temperatur des oder wenigstens eines der optischen Elemente vorgesehen ist, welche eine Vorrichtung zur Erfassung der Intensität des von dem betreffenden optischen Element abgestrahlten Lichtes aufweist und daß der Laserstrahl in Abhängigkeit von der erfaßten Lichtintensität in einer die Temperatur des betreffenden optischen Elementes beeinflussenden Art und Weise steuerbar ist. Sobald die erfaßte Temperatur des überwachten optischen Elementes Werte nahe der Verdampfungstemperatur annimmt und eine entsprechende Lichtintensität erfaßt wird, ist der Laserstrahl derart zu steuern, daß eine weitere Aufheizung des optischen Elementes ausgeschlossen ist. Die Steuerung des Laserstrahles kann dabei beispielsweise in einer Umlenkung, einer Verminderung der Strahlenergie und/oder in einer Abschaltung des Laserstrahls bestehen. Nach der entsprechenden Steuerung läßt sich das betreffende optische Element gegen ein voll funktionsfähiges optisches Element austauschen. Die Nutzung der Intensität des von dem betreffenden optischen Element abgestrahlten Lichtes als Parameter für die zu erfassende bzw. zu überwachende Temperatur bietet den Vorteil, daß die zur Temperaturerfassung- bzw. -überwachung einzusetzende Vorrichtung mit Abstand von dem optischen Element, außerhalb des Strahlengangs des Laserstrahls und damit räumlich variabel angeordnet werden kann. Besondere Einrichtungen zur Verbindung des optischen Elementes mit der Erfassungs- bzw. Überwachungsvorrichtung, etwa in Form gesonderter Verbindungsleitungen, sind nicht unbedingt erforderlich. Außerdem läßt sich erfaßtes Licht mit geringerem Aufwand von Störstrahlung bereinigen als etwa nicht sichtbare und beispielsweise bei der Werkstückbearbeitung in großem Umfang erzeugte Wärmestrahlung. Um eine derartige Störstrahlung handelt es sich beispielsweise bei Licht, das nicht von dem zu beobachtenden optischen Element sondern vielmehr aus dessen Umgebung stammt, das sich aber gleichwohl in Richtung auf die Vorrichtung zur Erfassung der Intensität des von dem zu beobachtenden optischen Element abgestrahlten Lichtes ausbreitet.

Zur Erfassung der Intensität des von dem betreffenden optischen Element abgestrahlten Lichtes sind erfindungsgemäß unterschiedliche technische Lösungen denkbar. Möglich wäre beispielsweise der Einsatz einer Kamera; erfindungsgemäß bevorzugt wird eine Vorrichtung, die wenigstens einen lichtempfindlichen Sensor aufweist. Dabei kann zur Beobachtung des betreffenden optischen Elementes auch ein Lichtleiterkabel verwendet werden, an dessen Ende sich dann eine Kamera oder ein lichtempfindlicher Sensor befindet.

Im Interesse einer optimalen Funktionsfähigkeit bzw. einer maximalen Betriebssicherheit der Vorrichtung zur Überwachung des oder der betreffenden optischen Elemente und somit im Interesse einer optimalen Funktionsfähigkeit bzw. einer maximalen Betriebssicherheit der gesamten Laseranordnung ist in Weiterbildung der Erfindung vorgesehen, daß die Vorrichtung zur Erfassung der Intensität des von dem betreffenden optischen Element abgestrahlten Lichtes, gegebenenfalls insbesondere der wenigstens eine Sensor, mit dem betreffenden optischen Element über zumindest eine Einrichtung in Strahlungsverbindung steht, mittels derer elektromagnetische Störstrahlung, insbesondere Prozeßlicht, und von dem betreffenden optischen Element abgestrahltes Licht voneinander trennbar sind und über welche von dem betreffenden optischen Element abgestrahltes Licht zu der Vorrichtung zur Erfassung der Intensität dieses Lichtes, gegebenenfalls insbesondere zu dem wenigstens einen Sensor, gelangt und welche elektromagnetische Störstrahlung, insbesondere Prozeßlicht, von der Vorrichtung zur Erfassung der Intensität des von dem betreffenden optischen Element abgestrahlten Lichtes, gegebenenfalls insbesondere von dem wenigstens einen Sensor, abhält. Durch diese Maßnahme wird sichergestellt, daß zu der Vorrichtung zur Erfassung der Intensität des von dem betreffenden optischen Element abgestrahlten Lichtes eine elektromagnetische Strahlung gelangt, deren Intensität unmittelbar, jedenfalls aber nach einer mit vertretbarem Aufwand zu bewerkstelligenden Verarbeitung, einen sicheren Rückschluß darauf zuläßt, ob die Temperatur des zu überwachenden optischen Elementes einen kritischen Wert erreicht hat bzw. in Kürze erreichen wird. Im Falle von Laseranordnungen, deren Laserstrahl als Bearbeitungsstrahl genutzt wird, geht von der Bearbeitungsstelle des Laserstrahls eine intensive elektromagnetische Störstrahlung in Form einer Störlichtstrahlung aus. Mittels der vorstehend beschriebenen erfindungsgemäßen Maßnahme wird der Einfluß dieser Störlichtstrahlung bei der Erfassung der Intensität des von dem zu überwachenden optischen Element abgestrahlten Lichtes zumindest gering gehalten.

Als Einrichtung zur Trennung von elektromagnetischer Störstrahlung, insbesondere Prozeßlicht, und von dem betreffenden optischen Element abgestrahltem Licht ist in vorteilhafter Weiterbildung der Erfindung zumindest eine Abschirmung der Vorrichtung zur Erfassung der Intensität des von dem betreffenden optischen Element abgestrahlten Lichtes, gegebenenfalls insbesondere des wenigstens einen Sensors, vorgesehen.

Als Abschirmung der vorstehenden Art bevorzugt wird erfindungsgemäß zumindest ein zwischen der Vorrichtung zur Erfassung der Intensität des von dem betreffenden optischen Element abgestrahlten Lichtes, gegebenenfalls insbesondere dem wenigstens einen Sensor und dem zu beobachtenden optischen Element angeordnetes optisches Filter. Bei einem derartigen Filter handelt es sich um eine wellenlängenbezogene Abschirmung, d.h. um eine Abschirmung, mittels derer sich elektromagnetische Strahlung einer bestimmten Wellenlänge bzw. eines bestimmten Wellenlängenbereiches von der Vorrichtung zur Erfassung der Intensität des von dem betreffenden optischen Element abgestrahlten Lichtes abhalten läßt.

Vor dem Hintergrund, daß von Auskoppel- oder von Fokussierlinsen abgestrahltes Licht üblicherweise eine Wellenlänge besitzt, die größenordnungsmäßig oberhalb 600 nm liegt, kann es zweckmäßig sein, zumindest ein optisches Filter vorzusehen, welches für Licht mit einer Wellenlänge, die größenordnungsmäßig oberhalb von 600 nm liegt, durchlässig und für elektromagnetische Strahlung mit einer Wellenlänge, die größenordnungsmäßig unterhalb von 600 nm liegt, undurchlässig ist.

Einer mit geringem konstruktivem Aufwand verbundenen wirksamen Abschirmung der Vorrichtung zur Erfassung der Intensität des von dem betreffenden optischen Element abgestrahlten Lichtes dienen diejenigen Merkmale der erfindungsgemäßen Laseranordnung, die in den Kennzeichnungsteilen der Ansprüche 6 bis 8 angegeben sind. Diese Ansprüche beschreiben Abschirmungen, deren Wirksamkeit auf der Anordnung der Vorrichtung zur Erfassung der Intensität des von dem betreffenden optischen Element abgestrahlten Lichtes gegenüber dem zu überwachenden optischen Element bzw. auf dem anspruchsgemäßen Beobachtungskanal beruht.

In weiterer bevorzugter Ausgestaltung der Erfindung ist vorgesehen, daß der bzw. wenigstens einer der Sensoren zur Erfassung der Intensität des von dem betreffenden optischen Element abgestrahlten Lichtes von einer Diode gebildet wird. Bei derartigen Dioden handelt es sich um bewährte, funktionssichere und darüber hinaus auch auf einfache Art und Weise in eine Maschinensteuerung integrierbare Bauteile.

Einer Automatisierung des Überhitzungsschutzes der betreffenden optischen Elemente erfindungsgemäßer Laseranordnungen dient es, daß - wie im Falle einer weiteren Variante der Erfindung vorgesehen - die Vorrichtung zur Erfassung der Intensität des von dem betreffenden optischen Element abgestrahlten Lichtes über eine Auswerteeinrichtung mit einer Anordnungssteuerung in Verbindung steht, wobei die Auswerteeinrichtung eine Vergleichseinheit aufweist, mittels derer ein der erfaßten Lichtintensität zugeordneter Ist-Wert mit einem vorgegebenen Referenzwert vergleichbar ist und wobei der Laserstrahl in Abhängigkeit von dem Vergleichsergebnis mittels der Anordnungssteuerung in einer die Temperatur des betreffenden optischen Elementes beeinflussenden Art und Weise steuerbar ist.

Die im Sinne der Erfindung bevorzugte Form der Steuerung des Laserstrahls zum Schutz des betreffenden optischen Elementes vor Überhitzung besteht in der Abschaltung des Laserstrahls. Zu diesem Zweck ist erfindungsgemäß vorgesehen, daß die Anordnungssteuerung mit dem Lasergenerator in Verbindung steht und letzterer mittels der Anordnungssteuerung zumindest abschaltbar ist.

Einer Anpassung der erfindungsgemäßen Laseranordnung an wechselnde Einzelfallerfordernisse dient es, daß der Referenzwert variabel ist. Eine Veränderlichkeit des Referenzwertes ist beispielsweise vor dem Hintergrund sinnvoll, daß unterschiedliche optische Elemente auch unterschiedliche Verdampfungstemperaturen besitzen können.

Im Falle von Ausführungsformen der erfindungsgemäßen Laseranordnung mit Sensoren in Form von Dioden ist mittels der Vergieichseinheit der Auswerteeinrichtung als der erfaßten Lichtintensität zugeordnerter Ist-Wert ein dem Diodenstrom und/oder der Diodenspannung zugeordneter Ist-Wert mit einem entsprechenden Referenzwert vergleichbar.

Um Fehlfunktionen der Einrichtung zum Überhitzungsschutz der betreffenden optischen Elemente zu verhindern, ist erfindungsgemäß außerdem vorgesehen, daß die Auswerteeinrichtung eine Korrektureinheit aufweist, mittels welcher ein der erfaßten Lichtintensität zugeordneter Ausgangs-Ist-Wert von Störeinflüssen bereinigbar und mittels der Vergleichseinheit der bereinigte Ist-Wert mit dem betreffenden Referenzwert vergleichbar ist. Dieser grundsätzliche Lösungsansatz wird an erfindungsgemäßen Laseranordnungen mit Sensoren in Form von Dioden gemäß dem Kennzeichnungsteil von Anspruch 15 umgesetzt. Ein besonders funktionssicherer Überhitzungsschutz des betreffenden optischen Elementes ist gewährleistet, wenn eine Korrektureinheit gemäß Anspruch 14 und/oder Anspruch 15 in Kombination mit einer oder mehreren der vorstehend beschriebenen Einrichtungen zur Trennung elektromagnetischer Störstrahlung und von dem betreffenden optischen Element abgestrahltem Licht vorgesehen ist.

Die Verbindung zwischen der Auswerteeinrichtung und der Anordnungssteuerung wird in bevorzugter Ausgestaltung der Erfindung durch einen Schwellwertschalter hergestellt, über welchen die Anordnungssteuerung in einem den Laserstrahl steuernden Sinne ansteuerbar ist, sobald der der erfaßten Lichtintensität zugeordnete Ist-Wert, gegebenenfalls der bereinigte Ist-Wert, den Referenzwert übersteigt.

Damit Fehlsteuerungen des Laserstrahls vermieden werden können, ist im Falle einer bevorzugten Ausführungsform der erfindungsgemäßen Laseranordnung bzw. der erfindungsgemäßen Laserbearbeitungsmaschine vorgesehen, daß die Vorrichtung zur Erfassung der Intensität des von dem betreffenden optischen Element abgestrahlten Lichtes und/oder die Auswerteeinrichtung insbesondere in Abhängigkeit von dem Betriebszustand der Laseranordnung bzw. der Laserbearbeitungsmaschine ein- und/oder ausschaltbar ist. Von der Möglichkeit, die Vorrichtung zur Erfassung der Lichtintensität und/oder die Auswerteeinrichtung abzuschalten, kann an einer Laserbearbeitungsmaschine beispielsweise zu dem Zeitpunkt sinnvoll Gebrauch gemacht werden, zu welchem mit dem Laserstrahl in das zu bearbeitende Werkstück "eingestochen" wird. Dieses Einstechen des Laserstrahls ist nämlich mit einer schlagartigen Lichtentwicklung verbunden, die von der Auswerteeinrichtung der Laseranordnung dem überwachten optischen Element zugeordnet werden könnte und dann zu einer an sich unbegründeten Steuerung, insbesondere Abschaltung, des Laserstrahls führen würde.

Im Interesse einer möglichst weitgehenden Automatisierung des Betriebes der erfindungsgemäßen Laseranordnung ist die Vorrichtung zur Erfassung der Intensität des von dem betreffenden optischen Element abgestrahlten Lichtes und/oder die Auswerteeinrichtung und/oder die Anordnungssteuerung rechnergesteuert.

In bevorzugter Ausgestaltung der Erfindung ist als Lasergenerator ein CO₂-Lasergenerator vorgesehen. Die von einem derartigen Gaslaser erzeugte Laserstrahlung ist nicht sichtbar und kann folglich beispielsweise mit einer Fotodiode nicht erfaßt werden.

Nachfolgend wird die Erfindung anhand schematischer Darstellungen zu Ausführungsbeispielen näher erläutert. Es zeigen:
- Fig. 1: den stark schematisierten Aufbau einer Laserschneidmaschine mit Temperaturüberwachung von optischen Elementen, Auswerteeinrichtungen und Maschinensteuerung,
- Fign. 2a bis 2c: stark schematisierte Darstellungen von Bearbeitungsköpfen mit Fokussierlinse und zugehöriger Temperaturüberwachung,
- Fig. 3: den prinzipiellen Aufbau der Auswerteeinrichtungen nach Figur 1 mit zugehöriger Fotodiode,
- Fig. 4: einen beispielhaften zeitabhängigen Verlauf des Diodenstromes an der Fotodiode nach Figur 3,
- Fig. 5: Diagramme zur Erläuterung der Steuerung der Laserschneidmaschine nach Figur 1 und
- Fig. 6: eine stark schematisierte Darstellung eines Bearbeitungskopfes mit Fokussierlinse und zugehöriger Temperaturüberwachung mit optischem Filter.

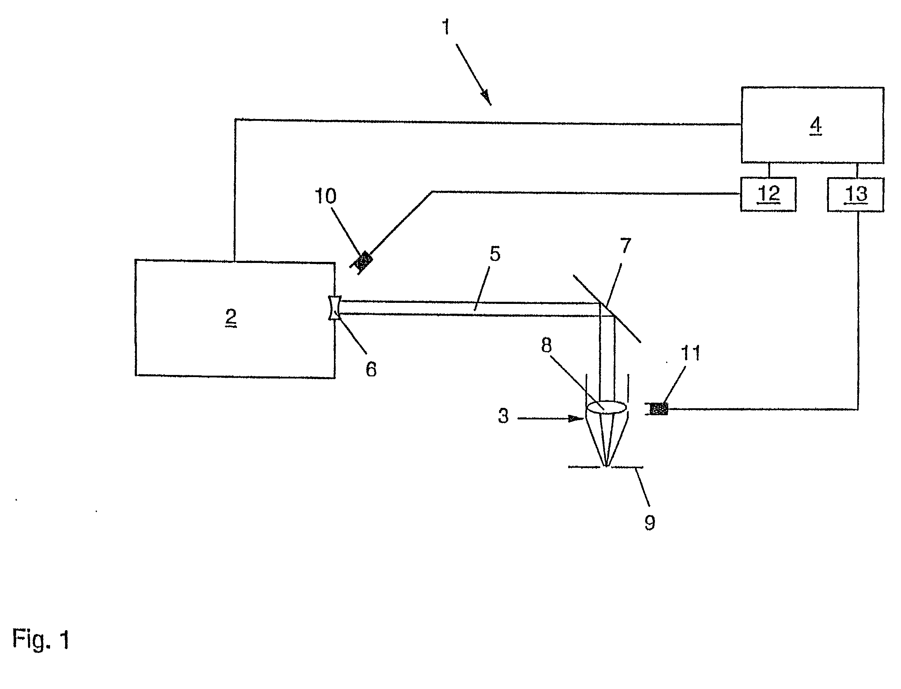

Gemäß Figur 1 umfaßt eine Laseranordnung in Form einer Laserbearbeitungs- bzw. Laserschneidmaschine 1 einen Gas- insbesondere CO₂-Lasergenerator 2, einen Bearbeitungskopf 3 sowie eine Anordnungs- bzw. Maschinensteuerung 4. Ein Laserstrahl 5 wird in dem Lasergenerator 2 erzeugt. In seinen Strahlengang eingeschaltet sind optische Elemente in Form einer Auskoppellinse 6 des Lasergenerators 2, eines Umlenkspiegels 7 sowie einer in dem Bearbeitungskopf 3 angeordneten Fokussierlinse 8. Mittels der Fokussierlinse 8 wird der Laserstrahl 5 auf ein zu bearbeitendes Werkstück 9 gebündelt.

Die Temperatur der Auskoppellinse 6 sowie der Fokussierlinse 8 wird überwacht. Hierzu dienen Vorrichtungen zur Erfassung der Intensität des von der Auskoppellinse 6 bzw. der Fokussierlinse 8 abgestrahlten Lichtes. Jede dieser Vorrichtungen weist einen lichtempfindlichen Sensor auf, der von einer Fotodiode 10 bzw. einer Fotodiode 11 gebildet wird. Mit der Maschinensteuerung 4 steht die Fotodiode 10 über eine Auswerteeinrichtung 12, die Fotodiode 11 über eine Auswerteeinrichtung 13 in Verbindung. Intensitätsmäßig erfaßt werden kann neben dem gesamten von dem zu überwachenden optischen Element ausgehenden Licht auch ausschließlich entsprechendes Licht einer bestimmten Wellenlänge bzw. eines bestimmten Wellenlängenbereiches.

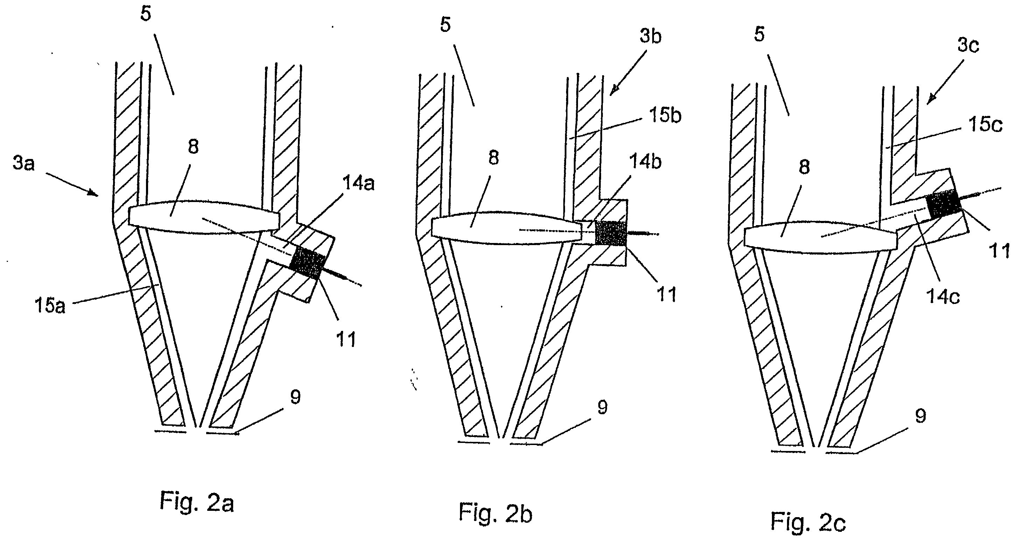

Verschiedene Möglichkeiten zur Anordnung der Fotodiode 11 gegenüber der Fokussierlinse 8 ergeben sich aus den Figuren 2a bis 2c. In allen dargestellten Fällen ist die Fotodiode 11 außerhalb des Strahlengangs des Laserstrahls 5 angebracht.

Gemäß Figur 2a steht die Fotodiode 11 über einen Beobachtungskanal 14a mit der Fokussierlinse 8 in Verbindung, der an der zu dem Werkstück 9 hin gelegenen Seite der Fokussierlinse 8 in einen Strahlführungsraum 15a eines Bearbeitungskopfes 3a mündet und dabei zu der Fokussierlinse 8 hin gegen die Achse des Laserstrahls 5 geneigt verläuft. Figur 2b zeigt die Fotodiode 11 am Ende eines Beobachtungskanals 14b, der an einem Bearbeitungskopf 3b auf Höhe der Fokussierlinse 8 in einen Strahlführungsraum 15b mündet und sich dabei senkrecht zu der Achse des Laserstrahls 5 erstreckt. Ausweislich Figur 2c ist ein Beobachtungskanal 14c für die Fotodiode 11 an der von dem Werkstück 9 abliegenden Seite der Fokussierlinse 8 an einen Strahlführungsraum 15c eines Bearbeitungskopfes 3c angeschlossen. Der Beobachtungskanal 14c verläuft dabei gegen die Achse des Laserstrahls 5 geneigt.

Die Beobachtungskanäle 14a, 14b, 14c erlauben eine Anordnung der Fotodiode 11 in einer gegenüber dem Laserstrahl 5 zurückgesetzten Position, in welcher sie gegen Lichtstrahlung von der Bearbeitungsstelle des Laserstrahls 5 an dem Werkstück 9 in beachtlichem Maße abgeschirmt ist.

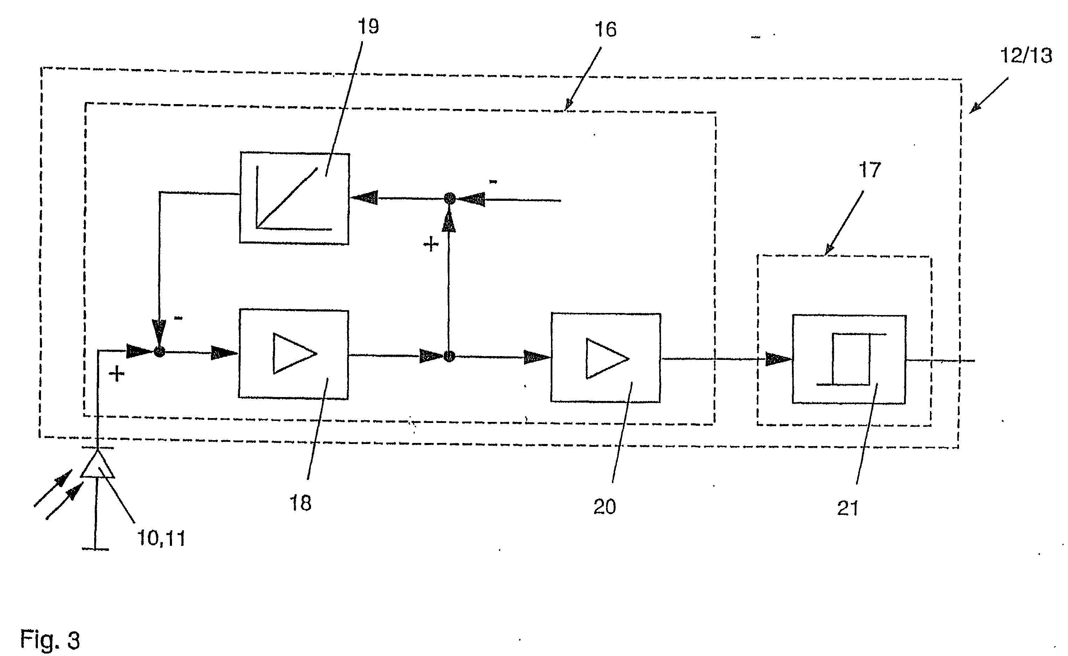

Wie Figur 3 in Form eines Blockschaltbildes zeigt, umfaßt die mit der Fotodiode 10 verbundene Auswerteeinrichtung 12 ebenso wie die an die Fotodiode 11 angeschlossene Auswerteeinrichtung 13 eine Korrektureinheit 16 sowie eine Vergleichseinheit 17. Die Korrektureinheit 16 beinhaltet dabei im wesentlichen eine erste Verstärkerstufe 18, ein Integrierglied 19 sowie eine zweite Verstärkerstufe 20. Die Vergleichseinheit 17 wird von einem Schwellwertschalter in Form einer entsprechenden Schwellwertschaltung 21 gebildet.

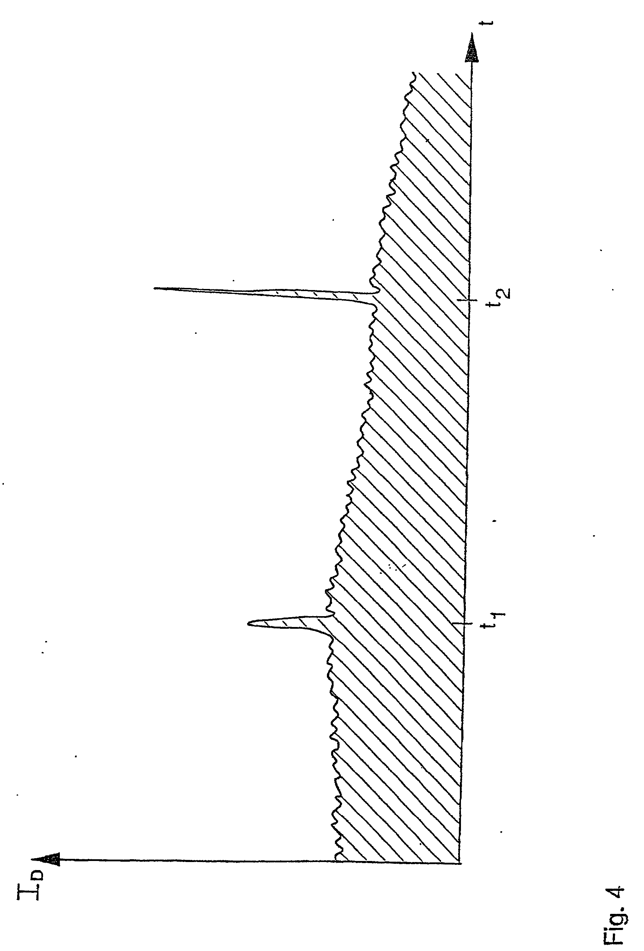

Der Verlauf des an den Fotodioden 10, 11 fließenden Diodenstromes I_{D} während der Zeit t ist in Figur 4 beispielhaft dargestellt. Verursacht wird der Diodenstrom I_{D} zum einen durch die auf die Fotodioden 10, 11 auftreffende Lichtstrahlung. Ein Anteil des Diodenstroms I_{D} ist darüber hinaus bedingt durch die Eigentemperatur der Fotodioden 10, 11, die ihrerseits wiederum durch die Umgebungstemperatur der Fotodioden 10, 11 bestimmt wird. Die auf die Fotodioden 10, 11 auftreffende Lichtstrahlung stammt aus verschiedenen Quellen. Eine Quelle ist das mittels der Fotodioden 10, 11 beobachtete optische Element, im Falle der Fotodiode 10 also die Auskoppellinse 6, im Falle der Fotodiode 11 die Fokussierlinse 8. Die Intensität dieser Lichtstrahlung und somit der durch diese Lichtstrahlung bedingte Anteil an dem Diodenstrom I_{D} ist abhängig von der Temperatur des betreffenden optischen Elementes. Darüber hinaus trifft auf den Fotodioden 10, 11 die allgemeine, nicht von der Auskoppellinse 6 bzw. der Fokussierlinse 8 stammende Umgebungslichtstrahlung auf, die ihrerseits ebenfalls einen Anteil an dem Diodenstrom I_{D} bedingt.

Nachdem der Laserstrahl 5 an der Laserschneidmaschine 1 derart gesteuert werden soll, daß ein Verdampfen der Auskoppellinse 6 sowie der Fokussierlinse 8 ausgeschlossen ist, ist vorliegend lediglich derjenige Anteil des Diodenstromes I_{D} relevant, der durch die Helligkeitsverhältnisse an der Auskoppellinse 6 bzw. an der Fokussierlinse 8 bedingt wird. Bei der übrigen Lichtstrahlung handelt es sich um eine Störstrahlung, dementsprechend bei dem auf diese Störstrahlung zurückzuführenden Teil des Diodenstroms I_{D} um einen Störstrom. Ebenfalls einen Störstrom bildet derjenige Anteil an dem Diodenstrom I_{D}, der durch die Eigentemperatur der Fotodiode 10 bzw. 11 hervorgerufen wird. Die Summe der Störströme wird als "Dunkelstrom" bezeichnet.

In Figur 4 nun ist der zeitabhängige Verlauf des Ist-Wertes des Diodenstroms I_{D} insgesamt, also einschließlich des Dunkelstromanteils, gezeigt. Dabei markiert der Abszissenwert t₁ den Zeitpunkt des mit einem schlagartigen Aufleuchten verbundenen Einstechens des Laserstrahls 5 in das Werkstück 9, der Abszissenwert t₂ denjenigen Zeitpunkt, zu dem die Auskoppellinse 6 bzw. die Fokussierlinse 8 eine Temperatur nahe ihrer Verdampfungstemperatur erreicht hat.

Zur Bereinigung des Ist-Wertes des Diodenstromes I_{D} gemäß Figur 4 von dem Dunkelstromanteil dient die in Figur 3 dargestellte Korrektureinheit 16 der Auswerteeinrichtung 12, 13. Dabei wird der Dunkelstromanteil des von der Fotodiode 10, 11 ausgehenden und von dem dort fließenden Diodenstrom I_{D} abhängigen Signals in der ersten Verstärkerstufe 18 ausgefiltert. Die Verstärkerstufe 18 ist als Differenzverstärker aufgebaut, wobei niederfrequente Signalanteile über das Integrierglied 19 auf den Bezugspunkt zurückgeführt werden. Das resultierende Signal wird in der zweiten Verstärkerstufe 20 verstärkt und anschließend der Schwellwertschaltung 21 zugeführt. Übersteigt die Stärke des der Schwellwertschaltung 21 zugeführten Signals einen in der Schwellwertschaltung 21 vorgegebenen Referenzwert, so wird es als Digitalsignal an die Maschinensteuerung 4 weitergegeben. Der genannte Referenzwert in der Schwellwertschaltung 21 repräsentiert eine Temperatur der Auskoppellinse 6 bzw. der Fokussierlinse 8, bei welcher das betreffende optische Element gerade noch nicht verdampft. Das an die Maschinensteuerung 4 weitergegebene Digitalsignal bewirkt, daß von der Maschinensteuerung 4 der Lasergenerator 2 und mit diesem der Laserstrahl 5 abgeschaltet wird. Die nicht mehr funktionsfähige Auskoppellinse 6 bzw. die nicht mehr funktionsfähige Fokussierlinse 8 kann dann ausgetauscht werden.

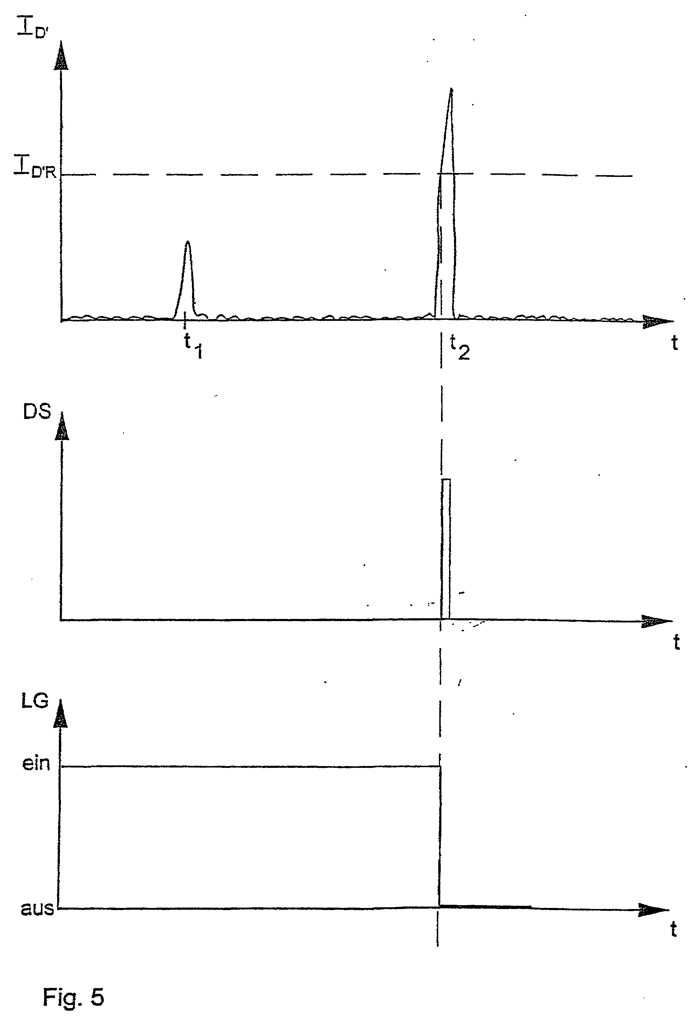

Figur 5 zeigt in der oberen Darstellung den zeitabhängigen Verlauf des von dem Dunkelstromanteil bereinigten Ist-Wertes des Diodenstroms I_{D},. Der Ordinatenwert I_{D'R} ist derjenige bereinigte Diodenstrom-Ist-Wert, bei welchem die Auskoppellinse 6 bzw. die Fokussierlinse 8 kurz vor dem Verdampfen steht und der folglich als Referenzwert dem Abschaltzeitpunkt t₂ des Lasergenerators 2 zugeordnet ist.

Die mittlere Darstellung von Figur 5 veranschaulicht die Zeitabhängigkeit des der Maschinensteuerung 4 zur Abschaltung des Lasergenerators 2 zugeführten Digitalsignals DS. Entsprechend zeigt die untere Darstellung von Figur 5 den Einschaltzustand des Lasergenerators 2 (LG) über der Zeit t.

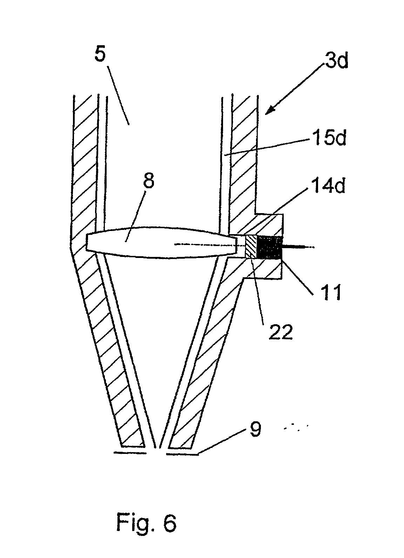

Figur 6 schließlich zeigt einen Bearbeitungskopf 3d, der in seinem Aufbau weitgehend mit dem Bearbeitungskopf 3b gemäß Figur 2b übereinstimmt. Auch im Falle des Bearbeitungskopfes 3d befindet sich die Fotodiode 11 der Vorrichtung zur Erfassung der Intensität des von der Fokussierlinse 8 abgestrahlten Lichtes am Ende eines Beobachtungskanals, hier eines Beobachtungskanals 14d, der senkrecht zu der Achse des Laserstrahls 5 verläuft und auf Höhe der Fokussierlinse 8 in einen Strahlführungsraum 15d mündet. Ebenso wie die Bearbeitungsköpfe 3a, 3b, 3c der Figuren 2a, 2b, 2c läßt sich auch der Bearbeitungskopf 3d an einer Laserschneidmaschine der in Figur 1 gezeigten Art einsetzen.

Abweichend von den vorstehend beschriebenen Bearbeitungsköpfen 3a, 3b, 3c ist an dem Bearbeitungskopf 3d gemäß Figur 6 ein optisches Filter 22 vorgesehen, welches der Fotodiode 11 zu der zu beobachtenden Fokussierlinse 8 hin vorgeschaltet ist. Bei dem optischen Filter 22 handelt es sich um ein Langpaßfilter, d.h. um ein optisches Filter mit einem niedrigen Transmissionsgrad im Bereich verhältnismäßig kleiner und einem hohen Transmissionsgrad im Bereich verhältnismäßig großer Wellenlängen. Lichtstrahlung mit einer Wellenlänge, die größenordnungsmäßig oberhalb von 600 nm liegt, wird von dem optischen Filter 22 zu der Fotodiode 11 durchgelassen; elektromagnetische Strahlung mit einer Wellenlänge, die größenordnungsmäßig unterhalb von 600 nm liegt, wird von dem optischen Filter 22 ausgefiltert. Hintergrund für diese Bemessung der Sperr- bzw. Durchlässigkeitsgrenze des optischen Filters 22 ist der Umstand, daß die Wellenlängen der von der Bearbeitungsstelle des Laserstrahls 5 an dem Werkstück 9 ausgehenden Strahlung, insbesondere die Wellenlängen des sogenannten "Prozeßlichts", größenordnungsmäßig hauptsächlich in dem Bereich unterhalb von 600 nm liegen, während das von der Fokussierlinse 8 abgestrahlte sogenannte "Linsenlicht" Wellenlängen besitzt, die größenordnungsmäßig oberhalb des genannten Wertes liegen.

Mittels des die Fotodiode 11 in dem Bearbeitungskanal 14d vollständig überdeckenden und dadurch abschirmenden optischen Filters 22 wird dementsprechend dafür gesorgt, daß zu der Fotodiode 11 im wesentlichen nur diejenige Lichtstrahlung gelangt, die von der zu beobachtenden Fokussierlinse 8 stammt und deren Intensität ein Maß für die zu überwachende Linsentemperatur ist. Die auf der Fotodiode 11 an dem Bearbeitungskopf 3d gemäß Figur 6 auftreffende Lichtstrahlung generiert - wie auch vorstehend bereits beschrieben - einen Diodenstrom. Dieser bzw. ein diesem entsprechendes Signal kann ohne weiteres in einer Vergleichseinheit, beispielsweise der vorstehend beschriebenen Schwellwertschaltung 21, mit einem Referenzwert verglichen werden und das Vergleichsergebnis dann als Grundlage für die Steuerung der betreffenden Laserschneidmaschine dienen. Im Interesse einer optimalen Funktionsfähigkeit bzw. einer maximalen Betriebssicherheit der Temperaturüberwachung der Fokussierlinse 8 wird der an der Fotodiode 11 fließende Diodenstrom bzw. das diesem entsprechende Signal aber bevorzugtermaßen in der insbesondere zu Figur 3 beschriebenen Art und Weise verarbeitet und von Störanteilen bereinigt. Der bereinigte Ist-Wert des Diodenstromes bzw. das bereinigte Signal dient dann wie beschrieben als Grundlage für die Steuerung der Laserschneidmaschine. Die Berücksichtigung des "Dunkelstrom"-Anteils des durch das auf der Fotodiode 11 auftreffende Licht generierten Diodenstromes gestaltet sich verhältnismäßig einfach. Insofern bietet die beschriebene Erfassung der Lichtintensität eine mit verhältnismäßig geringem Aufwand praktisch umzusetzende Möglichkeit, die Temperatur des betreffenden optischen Elementes zu überwachen.

## Patentansprüche

1. Laseranordnung, vorzugsweise Laserbearbeitungsmaschine, mit wenigstens einem optischen Element (6, 8), beispielsweise wenigstens einer Auskoppel- (6) und/oder wenigstens einer Fokussierlinse (8), welches in dem Strahlengang des Laserstrahls (5) angeordnet und für den Laserstrahl (5) zumindest teilweise durchlässig ist, wobei wenigstens eine Vorrichtung zur Erfassung der Temperatur des oder wenigstens eines der optischen Elemente (6, 8) vorgesehen ist, **dadurch gekennzeichnet, daß** die Vorrichtung zur Erfassung der Temperatur eine Vorrichtung zur Erfassung der Intensität des von dem betreffenden optischen Element (6, 8) abgestrahlten Lichtes aufweist und daß der Laserstrahl (5) in Abhängigkeit von der erfaßten Lichtintensität in einer die Temperatur des betreffenden optischen Elementes (6, 8) beeinflussenden Art und Weise steuerbar ist.

2. Laseranordnung nach Anspruch 1, **dadurch gekennzeichnet, daß** die Vorrichtung zur Erfassung der Intensität des von dem betreffenden optischen Element (6, 8) abgestrahlten Lichtes wenigstens einen lichtempfindlichen Sensor aufweist.

3. Laseranordnung nach einem der vorhergehenden Ansprüche, **dadurch gekennzeichnet, daß** die Vorrichtung zur Erfassung der Intensität des von dem betreffenden optischen Element (6, 8) abgestrahlten Lichtes, gegebenenfalls insbesondere der wenigstens eine Sensor, mit dem betreffenden optischen Element (6, 8) über zumindest eine Einrichtung in Strahlungsverbindung steht, mittels derer elektromagnetische Störstrahlung, insbesondere Prozeßlicht, und von dem betreffenden optischen Element (6, 8) abgestrahltes Licht voneinander trennbar sind und über welche von dem betreffenden optischen Element (6, 8) abgestrahltes Licht zu der Vorrichtung zur Erfassung der Intensität dieses Lichtes, gegebenenfalls insbesondere zu dem wenigstens einen Sensor, gelangt und welche elektromagnetische Störstrahlung, insbesondere Prozeßlicht, von der Vorrichtung zur Erfassung der Intensität des von dem betreffenden optischen Element (6, 8) abgestrahlten Lichtes, gegebenenfalls insbesondere von dem wenigstens einen Sensor, abhält.

4. Laseranordnung nach einem der vorhergehenden Ansprüche, **dadurch gekennzeichnet, daß** als Einrichtung zur Trennung von elektromagnetischer Störstrahlung, insbesondere Prozeßlicht, und von dem betreffenden optischen Element abgestrahltem Licht zumindest eine Abschirmung der Vorrichtung zur Erfassung der Intensität des von dem betreffenden optischen Element (6, 8) abgestrahlten Lichtes, gegebenenfalls insbesondere des wenigstens einen Sensors, vorgesehen ist.

5. Laseranordnung nach einem der vorhergehenden Ansprüche, **dadurch gekennzeichnet, daß** als Abschirmung der Vorrichtung zur Erfassung der Intensität des von dem betreffenden optischen Element (6, 8) abgestrahlten Lichtes, gegebenenfalls insbesondere des wenigstens einen Sensors, zumindest ein zwischen der genannten Vorrichtung und dem zu beobachtenden optischen Element (6, 8) angeordnetes optisches Filter (22) vorgesehen ist.

6. Laseranordnung nach einem der vorhergehenden Ansprüche, **dadurch gekennzeichnet, daß** die Vorrichtung zur Erfassung der Intensität des von dem betreffenden optischen Element (6, 8) abgestrahlten Lichtes, gegebenenfalls insbesondere der wenigstens eine Sensor, außerhalb des Strahlengangs des Laserstrahls (5) angeordnet ist und mit dem zu beobachtenden optischen Element (6, 8) über einen Beobachtungskanal (14a, 14b, 14c, 14d) in Verbindung steht, der unter einem Winkel gegenüber der Achse des Laserstrahls (5) verläuft.

7. Laseranordnung nach einem der vorhergehenden Ansprüche, **dadurch gekennzeichnet, daß** der Beobachtungskanal (14b, 14d), über welchen die Vorrichtung zur Erfassung der Intensität des von dem betreffenden optischen Element (6, 8) abgestrahlten Lichtes mit letzterem (6, 8) in Verbindung steht, im wesentlichen senkrecht zu der Achse des Laserstrahls (5) verläuft.

8. Laseranordnung nach einem der vorhergehenden Ansprüche, mit einem Strahlführungsraum (15a) für den Laserstrahl (5), **dadurch gekennzeichnet, daß** der Beobachtungskanal (14a) für den wenigstens einen Sensor in den Strahlführungsraum (15a) an derjenigen Seite des zu beobachtenden optischen Elementes (6, 8) mündet, welche im Strahlengang des Laserstrahls (5) dem zu bearbeitenden Werkstück (9) zugewandt ist und daß der Beobachtungskanal (14a) zu dem betreffenden optischen Element (6, 8) hin gegen die Achse des Laserstrahls (5) geneigt verläuft.

9. Laseranordnung nach einem der vorhergehenden Ansprüche, **dadurch gekennzeichnet, daß** der bzw. wenigstens einer der Sensoren von einer Diode (10, 11) gebildet wird.

10. Laseranordnung nach einem der vorhergehenden Ansprüche, **dadurch gekennzeichnet, daß** die Vorrichtung zur Erfassung der Intensität des von dem betreffenden optischen Element (6, 8) abgestrahlten Lichtes über eine Auswerteeinrichtung (12, 13) mit einer Anordnungssteuerung (4) in Verbindung steht, wobei die Auswerteeinrichtung (12, 13) eine Vergleichseinheit (17) aufweist, mittels derer ein der erfaßten Lichtintensität zugeordneter Ist-Wert mit einem vorgegebenen Referenzwert vergleichbar ist und wobei der Laserstrahl (5) in Abhängigkeit von dem Vergleichsergebnis mittels der Anordnungssteuerung (4) in einer die Temperatur des betreffenden optischen Elementes (6, 8) beeinflussenden Art und Weise steuerbar ist.

11. Laseranordnung nach einem der vorhergehenden Ansprüche, **dadurch gekennzeichnet, daß** die Anordnungssteuerung (4) mit dem Lasergenerator (2) in Verbindung steht und letzterer mittels der Anordnungssteuerung (4) zumindest abschaltbar ist.

12. Laseranordnung nach einem der vorhergehenden Ansprüche, **dadurch gekennzeichnet, daß** der Referenzwert variabel ist.

13. Laseranordnung nach einem der vorhergehenden Ansprüche, **dadurch gekennzeichnet, daß** mittels der Vergleichseinheit (17) der Auswerteeinrichtung (12, 13) als der erfaßten Lichtintensität zugeordneter Ist-Wert ein dem Diodenstrom und/oder der Diodenspannung zugeordneter Ist-Wert mit einem entsprechenden Referenzwert vergleichbar ist.

14. Laseranordnung nach einem der vorhergehenden Ansprüche, **dadurch gekennzeichnet, daß** die Auswerteeinrichtung (12, 13) eine Korrektureinheit (16) aufweist, mittels welcher ein der erfaßten Lichtintensität zugeordneter Ausgangs-Ist-Wert von Störeinflüssen bereinigbar und mittels der Vergleichseinheit (17) der bereinigte Ist-Wert mit dem betreffenden Referenzwert vergleichbar ist.

15. Laseranordnung nach einem der vorhergehenden Ansprüche, **dadurch gekennzeichnet, daß** mittels der Korrektureinheit (16) der Auswerteeinrichtung (12, 13) ein dem an der Diode (10, 11) fließenden Diodenstrom und/oder der an der Diode (10, 11) anliegenden Diodenspannung zugeordneter Ist-Wert von einem durch Störeinflüsse, insbesondere Umgebungstemperatur und Umgebungslicht der Diode (10, 11) vor allem in Form von Prozeßlicht, verursachten Diodenstrom- bzw. Diodenspannungswert bereinigbar ist, wobei der bereinigte Ist-Wert den Ist-Wert bildet, welcher mittels der Vergleichseinheit (17) mit dem betreffenden Referenzwert vergleichbar ist.

16. Laseranordnung nach einem der vorhergehenden Ansprüche, **dadurch gekennzeichnet, daß** die Vergleichseinheit (17) der Auswerteeinrichtung (12, 13) einen Schwellwertschalter (21) aufweist, über welchen die Auswerteeinrichtung (12, 13) mit der Anordnungssteuerung (4) in Verbindung steht und über welchen die Anordnungssteuerung (4) in einem den Laserstrahl (5) steuernden Sinne ansteuerbar ist, sobald der der erfaßten Lichtintensität zugeordnete Ist-Wert, gegebenenfalls der bereinigte Ist-Wert, den Referenzwert übersteigt.

17. Laseranordnung nach einem der vorhergehenden Ansprüche, **dadurch gekennzeichnet, daß** die Vorrichtung zur Erfassung der Intensität des von dem betreffenden optischen Element (6, 8) abgestrahlten Lichtes und/oder die Auswerteeinrichtung (12, 13) insbesondere in Abhängigkeit von dem Betriebszustand der Laseranordnung bzw. der Laserbearbeitungsmaschine (1) ein- und/oder ausschaltbar ist.

18. Laseranordnung nach einem der vorhergehenden Ansprüche, **dadurch gekennzeichnet, daß** die Vorrichtung zur Erfassung der Intensität des von dem betreffenden optischen Element (6, 8) abgestrahlten Lichtes und/oder die Auswerteeinrichtung (12, 13) und/oder die Anordnungssteuerung (4) rechnergesteuert ist.

19. Laseranordnung nach einem der vorhergehenden Ansprüche, **dadurch gekennzeichnet, daß** als Lasergenerator (2) ein CO₂-Lasergenerator vorgesehen ist.

## Claims

1. A laser apparatus, preferably a laser machining device, having at least one optical element (6, 8), for example at least one output lens (6) and/or at least one focusing lens (8), which is arranged in the beam path of the laser beam (5) and is at least partially transparent to the laser beam (5), wherein at least one device for detecting the temperature of the or at least one of the optical element(s) (6, 8) is provided, **characterised in that** the device for detecting the temperature has a device for detecting the intensity of the light radiated by the optical element (6, 8) concerned and the laser beam (5) can be controlled in dependence upon the detected light intensity in a manner that affects the temperature of the optical element (6, 8) concerned.

2. A laser apparatus according to claim 1, **characterised in that** the device for detecting the intensity of the light radiated by the optical element (6, 8) concerned has at least one light-sensitive sensor.

3. A laser apparatus according to either one of the preceding claims, **characterised in that** the device for detecting the intensity of the light radiated by the optical element (6, 8) concerned, where applicable especially the at least one sensor, is in radiative communication with the optical element (6, 8) concerned *via* at least one device by means of which interfering electromagnetic radiation, especially process light, and light radiated by the optical element (6, 8) concerned can be separated from each other and *via* which device light radiated by the optical element (6, 8) concerned passes to the device for detecting the intensity of that light, where applicable especially to the at least one sensor, and which device keeps interfering electromagnetic radiation, especially process light, from the device for detecting the intensity of the light radiated by the optical element (6, 8) concerned, where applicable especially from the at least one sensor.

4. A laser apparatus according to any one of the preceding claims, **characterised in that**, as the device for separating interfering electromagnetic radiation, especially process light, and light radiated by the optical element concerned there is provided at least one shield of the device for detecting the intensity of the light radiated by the optical element (6, 8) concerned, where applicable especially the at least one sensor.

5. A laser apparatus according to any one of the preceding claims, **characterised in that**, as the shield of the device for detecting the intensity of the light radiated by the optical element (6, 8) concerned, where applicable especially the at least one sensor, there is provided at least one optical filter (22) which is arranged between the said device and the optical element (6, 8) to be observed.

6. A laser apparatus according to any one of the preceding claims, **characterised in that** the device for detecting the intensity of the light radiated by the optical element (6, 8) concerned, where applicable especially the at least one sensor, is arranged outside the beam path of the laser beam (5) and is connected to the optical element to be observed (6, 8) *via* an observation passage (14a, 14b, 14c, 14d) which extends at an angle to the axis of the laser beam (5).

7. A laser apparatus according to any one of the preceding claims, **characterised in that** the observation passage (14b, 14d) *via* which the device for detecting the intensity of the light radiated by the optical element (6, 8) concerned is connected to the latter (6, 8) extends substantially perpendicular to the axis of the laser beam (5).

8. A laser apparatus according to any one of the preceding claims, comprising a beam guiding chamber (15a) for the laser beam (5), **characterised in that** the observation passage (14a) for the at least one sensor opens into the beam guiding chamber (15a) on that side of the optical element (6, 8) to be observed which, in the beam path of the laser beam (5), faces the workpiece (9) to be machined, and the observation passage (14a) extends towards the optical element (6, 8) concerned at an angle to the axis of the laser beam (5).

9. A laser apparatus according to any one of the preceding claims, **characterised in that** the or at least one of the sensor(s) is formed by a diode (10, 11).

10. A laser apparatus according to any one of the preceding claims, **characterised in that** the device for detecting the intensity of the light radiated by the optical element (6, 8) concerned is connected *via* an evaluation device (12, 13) to an apparatus control (4), the evaluation device (12, 13) having a comparison unit (17) by means of which an actual value associated with the detected light intensity can be compared with a specified reference value, and the laser beam (5) being controllable by means of the apparatus control (4) in dependence upon the result of the comparison in a manner that affects the temperature of the optical element (6, 8) concerned.

11. A laser apparatus according to any one of the preceding claims, **characterised in that** the apparatus control (4) is connected to the laser generator (2) and the latter can at least be switched off by means of the apparatus control (4).

12. A laser apparatus according to any one of the preceding claims, **characterised in that** the reference value is variable.

13. A laser apparatus according to any one of the preceding claims, **characterised in that**, as the actual value associated with the detected light intensity, an actual value associated with the diode current and/or the diode voltage can be compared with a corresponding reference value by means of the comparison unit (17) of the evaluation device (12, 13).

14. A laser apparatus according to any one of the preceding claims, **characterised in that** the evaluation device (12, 13) has a correction unit (16) by means of which an initial actual value associated with the detected light intensity can be corrected for interfering influences, and the corrected actual value can be compared with the reference value concerned by means of the comparison unit (17).

15. A laser apparatus according to any one of the preceding claims, **characterised in that**, by means of the correction unit (16) of the evaluation device (12, 13), an actual value associated with the diode current flowing at the diode (10, 11) or with the diode voltage present at the diode (10, 11) can be corrected for a diode current or voltage value produced by interfering influences, especially ambient temperature and ambient light of the diode (10, 11) above all in the form of process light, the corrected actual value forming the actual value that is compared with the reference value concerned by means of the comparison unit (17).

16. A laser apparatus according to any one of the preceding claims, **characterised in that** the comparison unit (17) of the evaluation device (12, 13) has a threshold switch (21) *via* which the evaluation device (12, 13) is connected to the apparatus control (4) and *via* which the apparatus control (4) can be driven to control the laser beam (5) as soon as the actual value associated with the detected light intensity, where applicable the corrected actual value, exceeds the reference value.

17. A laser apparatus according to any one of the preceding claims, **characterised in that** the device for detecting the intensity of the light radiated by the optical element (6, 8) concerned and/or the evaluation device (12, 13) can be switched on and/or off especially in dependence upon the operating status of the laser apparatus or laser machining device (1).

18. A laser apparatus according to any one of the preceding claims, **characterised in that** the device for detecting the intensity of the light radiated by the optical element (6, 8) concerned and/or the evaluation device (12, 13) and/or the apparatus control (4) are/is computer-controlled.

19. A laser apparatus according to any one of the preceding claims, **characterised in that** a CO₂ laser generator is provided as the laser generator (2).

## Revendications

1. Dispositif laser, de préférence machine à usiner au laser, comportant au moins un élément optique (6, 8), par exemple au moins une lentille de sortie (6) et/ou au moins une lentille de focalisation (8), lequel est disposé sur le trajet du faisceau laser (5) et est au moins partiellement transparent au faisceau laser (5), dans lequel est prévu au moins un dispositif de mesure de la température du ou au moins d'un des éléments optiques (6, 8), **caractérisé par le fait que** le dispositif de mesure de la température présente un dispositif de mesure de l'intensité de la lumière émise par l'élément optique concerné (6, 8) et que le faisceau laser (5) peut être commandé en fonction de l'intensité lumineuse mesurée d'une manière ayant une incidence sur la température de l'élément optique concerné (6, 8).

2. Dispositif laser selon la revendication 1, **caractérisé par le fait que** le dispositif de mesure de l'intensité de la lumière émise par l'élément optique concerné (6, 8) présente au moins un capteur sensible à la lumière.

3. Dispositif laser selon l'une des revendications précédentes, **caractérisé par le fait que** le dispositif de mesure de l'intensité de la lumière émise par l'élément optique concerné (6, 8), le cas échéant en particulier le ou les capteur(s), est relié par rayonnement avec l'élément optique concerné (6, 8) par le biais d'au moins un dispositif au moyen duquel le rayonnement électromagnétique parasite, en particulier la lumière de procédé, et la lumière émise par l'élément optique concerné (6, 8) peuvent être séparés et via lequel la lumière émise par l'élément optique concerné (6, 8) parvient au dispositif de mesure de l'intensité de cette lumière, le cas échéant en particulier au(x) capteur(s), et qui empêche le rayonnement électromagnétique parasite, en particulier la lumière de procédé, de parvenir au dispositif de mesure de l'intensité de la lumière émise par l'élément optique concerné (6, 8), le cas échéant en particulier au(x) capteur(s).

4. Dispositif laser selon l'une des revendications précédentes, **caractérisé par le fait qu'**il est prévu comme dispositif de séparation du rayonnement électromagnétique parasite, en particulier de la lumière de procédé, et de la lumière émise par l'élément optique concerné au moins une protection du dispositif de mesure de l'intensité de la lumière émise par l'élément optique concerné (6, 8), le cas échéant en particulier du ou des capteurs.

5. Dispositif laser selon l'une des revendications précédentes, **caractérisé par le fait qu'**il est prévu comme protection du dispositif de mesure de l'intensité de la lumière émise par l'élément optique concerné (6, 8), le cas échéant en particulier du ou des capteurs, au moins un filtre optique (22) disposé entre le dispositif mentionné et l'élément optique (6, 8) à observer.

6. Dispositif laser selon l'une des revendications précédentes, **caractérisé par le fait que** le dispositif de mesure de l'intensité de la lumière émise par l'élément optique concerné (6, 8), le cas échéant en particulier le ou les capteurs, est disposé en dehors du trajet du faisceau laser (5) et est en communication avec l'élément optique à observer (6, 8) par un conduit d'observation (14a, 14b, 14c, 14d) qui fait un angle avec l'axe du faisceau laser (5).

7. Dispositif laser selon l'une des revendications précédentes, **caractérisé par le fait que** le conduit d'observation (14b, 14d) par lequel le dispositif de mesure de l'intensité de la lumière émise par l'élément optique concerné (6, 8) est en communication avec ce dernier (6, 8) est grosso modo perpendiculaire à l'axe du faisceau laser (5).

8. Dispositif laser selon l'une des revendications précédentes comportant une chambre de focalisation de faisceau (15a) pour le faisceau laser (5), **caractérisé par le fait que** le conduit d'observation (14a) pour le ou les capteur(s) aboutit dans la chambre de focalisation de faisceau (15a) du côté de l'élément optique à observer (6, 8) situé vers la pièce (9) sur le trajet du faisceau laser (5) et que le conduit d'observation (14a) s'étend vers l'élément optique concerné (6, 8) selon une direction inclinée par rapport à l'axe du faisceau laser (5).

9. Dispositif laser selon l'une des revendications précédentes, **caractérisé par le fait que** le ou au moins un des capteurs est formé par une diode (10, 11).

10. Dispositif laser selon l'une des revendications précédentes, **caractérisé par le fait que** le dispositif de mesure de l'intensité de la lumière émise par l'élément optique concerné (6, 8) est relié par un dispositif d'évaluation (12, 13) à une commande de dispositif (4), le dispositif d'évaluation (12, 13) présentant un organe de comparaison (17) au moyen duquel il est possible de comparer une valeur réelle associée à l'intensité lumineuse mesurée à une valeur de référence prédéfinie et le faisceau laser (5) pouvant être commandé en fonction du résultat de la comparaison au moyen de la commande de dispositif (4) d'une manière ayant une incidence sur la température de l'élément optique concerné (6, 8).

11. Dispositif laser selon l'une des revendications précédentes, **caractérisé par le fait que** la commande de dispositif (4) est reliée avec le générateur laser (2) et que ce dernier peut au moins être coupé au moyen de la commande de dispositif (4).

12. Dispositif laser selon l'une des revendications précédentes, **caractérisé par le fait que** la valeur de référence est variable.

13. Dispositif laser selon l'une des revendications précédentes, **caractérisé par le fait qu'**il est possible au moyen de l'organe de comparaison (17) du dispositif d'évaluation (12, 13) de comparer, en tant que valeur réelle associée à l'intensité lumineuse mesurée, une valeur réelle associée au courant et/ou à la tension de diode avec une valeur de référence correspondante.

14. Dispositif laser selon l'une des revendications précédentes, **caractérisé par le fait que** le dispositif d'évaluation (12, 13) présente un organe de correction (16) au moyen duquel une valeur réelle de sortie associée à l'intensité lumineuse mesurée peut être corrigée des influences parasites et la valeur réelle corrigée comparée au moyen de l'organe de comparaison (17) avec la valeur de référence correspondante.

15. Dispositif laser selon l'une des revendications précédentes, **caractérisé par le fait qu'**il est possible de corriger au moyen de l'organe de correction (16) du dispositif d'évaluation (12, 13) une valeur réelle associée au courant de diode circulant dans la diode (10, 11) et/ou à la tension de diode présente à la diode (10, 11) d'une valeur de courant de diode ou de tension de diode provoquée par des influences parasites, en particulier la température ambiante et la lumière ambiante de la diode (10, 11) surtout sous la forme de lumière de procédé, la valeur réelle corrigée formant la valeur réelle qui est comparable au moyen de l'organe de comparaison (17) avec la valeur de référence concernée.

16. Dispositif laser selon l'une des revendications précédentes, **caractérisé par le fait que** l'organe de comparaison (17) du dispositif d'évaluation (12, 13) présente un commutateur à seuil (21) par l'intermédiaire duquel le dispositif d'évaluation (12, 13) est en communication avec la commande de dispositif (4) et au moyen duquel la commande de dispositif (4) peut être activée en vue de la commande du faisceau laser (5) dès que la valeur réelle, le cas échéant la valeur réelle corrigée, associée à l'intensité lumineuse mesurée dépasse la valeur de référence.

17. Dispositif laser selon l'une des revendications précédentes, **caractérisé par le fait que** le dispositif de mesure de l'intensité de la lumière émise par l'élément optique concerné (6, 8) et/ou le dispositif d'évaluation (12, 13) est connectable ou déconnectable, en particulier en fonction de l'état de fonctionnement du dispositif laser ou de la machine à usiner au laser (1).

18. Dispositif laser selon l'une des revendications précédentes, **caractérisé par le fait que** le dispositif de mesure de l'intensité de la lumière émise par l'élément optique concerné (6, 8) et/ou le dispositif d'évaluation (12, 13) et/ou la commande de dispositif (4) sont pilotés par ordinateur.

19. Dispositif laser selon l'une des revendications précédentes, **caractérisé par le fait qu'**il est prévu comme générateur laser (2) un générateur laser au CO₂.
